(19) Europäisches Patentamt

European Patent Office

Office européen des brevets

(11) **EP 1 337 737 B2**

(12) **NEUE EUROPÄISCHE PATENTSCHRIFT**

(45) Veröffentlichungstag und Bekanntmachung des Hinweises auf die Entscheidung über den Einspruch:
**27.12.2006  Patentblatt 2006/52**

(45) Hinweis auf die Patenterteilung:
**03.03.2004  Patentblatt 2004/10**

(21) Anmeldenummer: **02750771.4**

(22) Anmeldetag: **29.05.2002**

(51) Int Cl.:
*F01B 17/04* (2006.01)

(86) Internationale Anmeldenummer:
**PCT/DE2002/001968**

(87) Internationale Veröffentlichungsnummer:
**WO 2002/099319 (12.12.2002 Gazette 2002/50)**

(54) **GLEITPAARUNG FÜR VON WASSERDAMPF MIT HOHEM DRUCK- UND TEMPERATURNIVEAU BEAUFSCHLAGTE MASCHINENTEILE, VORZUGSWEISE FÜR KOLBEN-ZYLINDER-ANORDNUNGEN VON DAMPFMOTOREN**

SLIDING PAIRING FOR MACHINE PARTS THAT ARE SUBJECTED TO THE ACTION OF HIGHLY PRESSURIZED AND HIGH-TEMPERATURE STEAM, PREFERABLY FOR PISTON-CYLINDER ASSEMBLIES OF STEAM ENGINES

SYSTEME D'ASSOCIATION COULISSANTE POUR PIECES DE MACHINE QUI SONT SOUMISES A L'EFFET D'UNE VAPEUR D'EAU A PRESSION ET TEMPERATURE ELEVEES, DE PREFERENCE POUR ENSEMBLES PISTON-CYLINDRE DE MOTEURS A VAPEUR

(84) Benannte Vertragsstaaten:
**DE FR GB IT SE**

(30) Priorität: **01.06.2001  DE 10128055**

(43) Veröffentlichungstag der Anmeldung:
**27.08.2003  Patentblatt 2003/35**

(73) Patentinhaber:
  • **SGL CARBON AG**
    **65203 Wiesbaden (DE)**
  • **Tea GmbH**
    **10587 Berlin (DE)**

(72) Erfinder:
  • **HÖTGER, Michael**
    **13503 Berlin (DE)**
  • **KLEEMANN, Jens**
    **12355 Berlin (DE)**
  • **RIEPE, Axel**
    **10965 Berlin (DE)**
  • **THIELE, Walter**
    **53173 Bonn (DE)**

(74) Vertreter: **Bürger, Peter**
  **IAV GmbH,**
  **Ingenieurgesellschaft Auto und Verkehr,**
  **Kauffahrtei, 45**
  **09120 Chemnitz (DE)**

(56) Entgegenhaltungen:
| EP-A- 0 717 019 | DE-A- 3 406 479 |
| DE-A- 10 209 858 | DE-A- 19 815 989 |
| DE-U- 9 419 961 | DE-U- 29 906 867 |
| US-A- 5 332 422 | |

**EP 1 337 737 B2**

**Beschreibung**

Die Erfindung betrifft Gleitpaarungen für von Wasserdampf mit hohem Druck- und Temperaturniveau beaufschlagte Maschinenteile gemäß dem Oberbegriff des Hauptanspruches und der Nebenansprüche.

Vorbekannt ist es durch die Schrift DE 299 05 857 U 1, bei Wärmekraftmaschinen, vorzugsweise Dampfmotoren, mit einem Kolbentrieb, für unter Einwirkung von hochgespanntem Dampf, d.h. einem gesättigten Dampf knapp unterhalb des kritischen Punktes (T< 374°C), auch unterkritischer Dampf genannt, aufeinander gleitende Teile Materialpaarungen einzusetzen, die einen Trockenfilm ausbilden und bei denen Materialtransfer zwischen den Gleitflächen eintritt. Als selbstschmierende Werkstoffe werden u.a. für Kolbenringe solche auf der Basis von Kohle, Polytetrafluoräthylen oder mit Antimon imprägnierte Kunstkohle eingesetzt. Kunstkohle ist ein Werkstoff, der im wesentlichen Kohlenstoff beinhaltet und eine amorphe Struktur aufweist. Hier ist abzugrenzen gegen Graphitwerkstoffe, die mindestens teilweise Kohlenstoff beinhalten, der gemäß der Graphitkristallstruktur kristallin angeordnet ist. Als Gegenlaufflächen der vorgenannten Werkstoffe können auch Hartbeschichtungen, vorzugsweise Ceresit-Hartbeschichtungen, zum Einsatz kommen.

Vorbekannt ist es aus der Schrift DE-OS 1 957 908, mit Wismut und Nickel imprägnierter Graphit als Hüllmaterial für Brennstoffelemente in Kernreaktoren einzusetzen. Dieser imprägnierte Graphit weist für den Einsatz unter hohen Temperaturen, in Anwesenheit von Wasser oder Dampf eine höhere Beständigkeit als reiner Graphit auf.

Günstige Eigenschaften brachten Wismutlegierungen mit einem Nickelgehalt von 8 bis 27 Gew.-%. Eine Imprägnierung des Graphits mit einer Wismutlegierung, die 9 Gew.-% Nickel aufweist erfolgt vorzugsweise bei einer Temperatur von 800°C und einem Stickstoffdruck von 20 kp/cm$^2$. Derart behandelter Graphit ist bei einer Betriebstemperatur von 460°C einsetzbar.

Bei Anwendung einer Wismutlegierung mit 25 Gew.-% Nickel erfolgt das imprägnieren bei 1.250°C und bei einem Druck von 20 kp/cm$^2$. Der in dieser Weise behandelte Graphit ist für Betriebstemperaturen bis 650°C geeignet.

In dieser Schrift wurde als Imprägniermetall auch Aluminium und Zirkonium in Betracht gezogen, jedoch zeigte sich, dass diese Metalle bei Berührung mit Graphit und unter Einfluss von Dampf oder Wasser bei hohen Betriebstemperaturen eines Kernreaktors erheblich korrodieren.

Unter den vorgenannten Einsatzbedingungen wirkt Graphit generell wie eine Wasserstoffelektrode, sodass sämtliche Metalle, die gegenüber einer solchen Elektrode positives elektrochemisches Oxydationspotenzial aufweisen, bei diesen Bedingungen korrodieren.

Maßstab für die Beständigkeit bildete jeweils die Massenverringerung In mg/cm$^2$ bezogen auf die Oberfläche von Proben unter den beschriebenen Bedingungen.

Ob die beschriebenen Graphitwerkstoffe bei den angegebenen Betriebstemperaturen auch als Gleitwerkstoffe eingesetzt werden können, wird jedoch nicht für den Fachmann ersichtlich.

Vorbekannt ist durch die Schrift DE 43 18 193 A 1, Kolben für einen Verbrennungsmotor aus einem Werkstoff herzustellen, der eine isotrope Graphitmatrix mit 60 bis 95 Vol.-% des Volumens des Werkstoffs aufweist und eine Porosität im Bereich von höchstens 10 % besitzt. Die Poren der Graphitmatrix sind hierbei mit einer Aluminiumlegierung gefüllt. Es ergibt sich für Kraftmaschinen mit hohem Arbeitstemperaturbereich eine zu hohe Ausdehnung für Passungen mit Stahl- bzw. Eisenwerkstoffen. Bei Einwirkung von hohen Temperaturen und Feuchtigkeit wird an den Gleitflächen die Aluminiumlegierung der Porenfüllung zersetzt, so dass sich eine geminderte Verschleißfestigkeit und ein geminderter Wärmeübergang ergeben..

Vorbekannt ist es durch die Schrift DE 44 11 059 A 1, Kolben für Verbrennungsmotoren auf der Grundlage eines offenporigen Grundkörpers aus isotropem Graphit herzustellen. Das Porensystem des Grundkörpers ist mit einem Metall aus der Gruppe Kupfer, Antimon oder Silizium oder aber mit Legierungen dieser Metalle imprägniert bzw. gefüllt. Es wird eine hohe Warmfestigkeit der so ausgeführten Kolben erzielt.

Vorbekannt ist durch die Schrift DE 198 15 988 C1 eine Führungsanordnung, bei der die Oberflächen zweier Teile aneinander gleiten. Besonders günstiges Verhalten wird erzielt durch ungleiche Materialien der Gleitflächen, wobei das erste Material der Gruppe von polykristallinem Diamant, amorphem Kohlenstoff, tetragonal koordiniertem Kohlenstoff und metallhaltigem Kohlenwasserstoff und das zweite Material aus der Gruppe von mesophasigem Graphit und Ultrafeinkorn-Graphit angehört.

vorbekannt ist durch die Schrift DE 196 51 069 A1 ein ölloser und ungekühlter Dieselmotor mit Hubkolben, der jedoch Kolbenringe aufweist. Der Hubkolben wird aus einem Arbeitskolben und einem Führungskolben gebildet, dabei weist der Arbeitskolben einen kleineren Durchmesser als der Führungskolben auf und bewegt sich oszillierend berührungslos zu einem Arbeitszylinder mit geringer Wärmeausdehnung und geringer Wärmeleitfähigkeit. Durch diese Gestaltung soll eine adiabete Arbeitsweise erreicht werden. Der Arbeitskolben kann aus verschiedenen Materialien gefertigt sein, z. B.: Quarzglas, Elektrographit oder Kohlenstoffgraphit, während der Arbeitszylinder aus: Quarzglas - z.B. welches für laserspektroskopische Untersuchungen - oder aus Nilo 42 oder aus GGG-NiCr 353, bekannt als Material für Gasturbinengehäuse, bestehen kann. Bei der Paarung eines Arbeitskolbens aus Elektrographit und einem Arbeitszylinder aus Nilo 42 oder GGG-NiCr 353 ist ein strammes Einpassen des Arbeitskolbens aufgrund der geringen Differenzen der Paarungen hinsichtlich Wärmeausdehnungszahl und Wärmeleitfähigkeit möglich.

Vorbekannt ist es durch die Schrift EP 0 258 330 B1, bei Kolbenmotoren die Kolben und Kolbenringe aus modifiziertem Kohlenstoff in Form von Pressgraphit, insbesondere Elektrographit auszuführen und die Oberflächen dieser Teile abbrandfest zu gestalten. Als Gleitpartner für die vorgenannten Teile sind Zylinderbüchsen aus gleichartigern Material, jedoch mit durch Karbidisieren, Silizieren oder Nitrieren vergüteter Oberfläche oder aus keramischen Werkstoffen, z.B. Siliziumkarbid bzw. -nitrid, vorgesehen.

Der Erfindung liegt die Aufgabe zugrunde, Gleitpaarungen zu schaffen, wobei ein erstes Gleitelement, vorzugsweise Kolben, Kolbenringe oder Ventilführungen, mit einem zweiten Gleitpartner unter der Atmosphäre von Wasserdampf bei hohen Drücken und hoher Temperatur, insbesondere von überkritischem Wasserdampf, und bevorzugt auch bei der Beaufschlagung mit Wasser, verschleißarm gleitet.

Erfindungsgemäß wird dies durch die in dem Hauptanspruch und den Nebenansprüchen genannten Zusammenstellungen des Materials der Gleitpartner erreicht.

Die erfindungsgemäßen Gleitpaarungen erweisen sich bei Kolben und Zylinder, Kolbenring und Zylinder, Kolben, Kolbenringen und Zylinder bzw. bei Ventilen und zugehörigen Ventilführungen und Dichtelementen von Dreh- oder Kreiskolbenmaschinen, wie z.B. Dichtleisten und Trennschieber sowie Gehäuse, beim Beaufschlagen mit Wasserdampf bei hohen Drücken und hoher Temperatur, insbesondere überkritischem Wasserdampf, und vorzugsweise auch unter Anwesenheit von Wasser zwischen den Gleitpartnern funktionsfähig bei nur geringem Verschleiß. Sie sind damit auch vorteilhaft für von Dampf und vorzugsweise auch Wasser beaufschlagte Lagerungen anwendbar.

Besteht die Gleitpaarung aus einem Ventil und dessen Führungsbuchse, so ist vorzugsweise das Ventil aus dem warmfesten Material und die Führungsbuchse aus dem im wesentlichen aus Kohlenstoff bestehenden Werkstoff hergestellt.

Die Bedingungen, unter denen die erfindungsgemäßen Gleitpaarungen noch einsetzbar sind, zeichnen sich insbesondere dadurch aus, dass in der Atmosphäre des Wasserdampfes üblicherweise maximale Drücke von 20 bar bis 600 bar, bevorzugt 40 bar bis zu 120 bar und besonders bevorzugt 45 bis 60 bar herrschen und üblicherweise maximale Temperatur von 300°C bis 800°C, bevorzugt 400°C bis 650°C und besonders bevorzugt 450°C bis 550°C. Hierbei beherrschen die Gleitpaarungen auch beim Start einer Dampfmaschine alle Temperaturbereiche des Wasserdampfes von 100°C bis zur maximalen Temperatur. Weiterhin ist bevorzugt auch der Start von Maschinen im Trokkenlauf kein Problem für die erfindungsgemäßen Gleitpaarungen. Ebenso beherrschen die Gleitpaarungen bevorzugt die Reibung im Wasser, bevorzugt über einen Temperaturbereich von - 40°C bis +300°C, besonders bevorzugt über einen Temperaturbereich von 0°C bis +100°C. Bevorzugte Gleitpaarungen sind weiterhin auch in der Lage in Anwendungen eingesetzt zu werden, bei denen entlang der Gleitfläche ein Temperaturgradient besteht, der üblicherweise 200°C Temperaturunterschied aufweist, bevorzugt sogar 300°C und besonders bevorzugt sogar 500°C.

Eine bevorzugte Variante der Gleitpaarung besteht darin, dass bei einen Gleitsystem Kolben-Zylinder, sowohl der Kolben als auch sein Kolbenring aus ein und demselben im wesentlichen aus Kohlenstoff bestehenden Werstoff bestehen, so dass die bisherigen Probleme durch unterschiedliche Wärmeausdehnungskoeffizienten von Kolben und Kolbenring vermieden werden.

Erfindungsgemäß handelt es sich bei dem im wesentlichen aus Kohlenstoff bestehenden Gleitwerkstoff des ersten Gleitelements um einen mit Metall, oder einer Metalllegierung gefüllten, porösen Kohlenstoffkörper, der als funktions wesentlichen Bestandteil einen kristallographisch vergleichsweise schlecht geordneten Graphit auf Basis Rußkoks und/ Naturgraphit enthält. Das eingebrachte Metall, oder die eingebrachte Metalllegierung ist nach dem Verhalten unter den Bedingungen von Wasserdampf bei sehr hohen Temperaturen und Drücken und ggf. unter Anwesenheit von schmierenden Zusatzstoffen auszuwählen. Die Metalle Antimon, Nickel, Silber und Kupfer und Legierungen dieser Metalle sind hierfür bevorzugt geeignet, dabei besonders bevorzugt jedoch ist Antimon.

Das aus einem eisenhaltigen hochwarmfesten Werkstoff, vorzugsweise mit Chrom und/oder Nickel legiert, hergestellte zweite Gleitelement ist mindestens an der Gleitfläche mit einer Nitrierschicht versehen. Es kann hierbei auch pulvermetallurgisch hergestellt sein. Das Material weist dabei vorzugsweise 15-25 Gew.-% Chrom und/oder 25-40 Gew.-% Nickel auf.

Das zweite Gleitelement der Gleitpaarung kann - vorzugsweise als Zylinder- oder Führungsbuchse - erfindungsgemäß auch aus einer Leichtmetalllegierung bestehen, vorzugsweise mit zwei oder mehreren der nach genannten Stoffe Al; Mg: Ti.

Ebenfalls ist es erfindungsgemäß möglich, des zweite Gleitelement aus einem pulvermetallurgischen Werkstoff, der Eisen bzw. Stahl und Titankarbide enthält, herzustellen. Prinzipiell kann es ebenso aus gesintertem Hartmetall bestehen oder eine Gleitschicht aus Hartmetall aufweisen.

Ist das zweite Gleitelement vorzugsweise eine Zylinder oder Führungsbuchse, so kann es erfindungsgemäß aus einem Keramikverbundstoff hergestellt sein. Er kann beispielsweise aus Titankarbid, Chrom und Nickel bestehen. Vorteilhaft kann der Keramikverbundstoff zusätzlich Mangan enthalten.

Ebenso kann es sich bei dem Werkstoff des zweiten Gleitelements um einen Kohlenstoffwerkstoff handeln, der zu mindestens im wesentlichen Graphit beinhaltet. Beispiele hierfür sind graphitgefüllte Kohlenstoffwerkstoffe, deren Binder nur carbonisiert wurde, und Graphitwerkstoffe. Diese Werkstoffe des zweiten Gleitelements sind vorzugsweise mit den Füllstoffen imprägniert, die auch für das erste Gleitelement benutzt werden können.

Bevorzugt weist der Werkstoff des zweiten Gleitelements der erfindungsgemäßen Gleitpaarung auch noch eine Verschleißschutzschicht auf. Insbesondere werden hierbei Titannitrid-, Chromnitrid- und Chromkarbidschichten sowie amorphe diamantähnliche Kohlenstoffschichten (DLC-Schichten) benutzt.

Alle vorstehend angeführten Materialien für das zweite Gleitelement gewährleisten zusammen mit einem ersten Gleitelement, das aus einem mit Metall oder Metalllegierung, gefüllten, porösen Kohlenstoffwerkstoff besteht, der als funktionswesentlichen Bestandteil Graphit auf Basis Rußkoks und Naturgraphit enthält, ein verschleißarmes Gleiten unter den in der Aufgabenstellung genannten, schwierigen Betriebsbedingungen.

Zur Definition der Zusammensetzung der im wesentlichen aus Kohlenstoff bestehenden erfindungsgemäßen Gleitwerkstoffe des ersten Gleitelements werden die folgenden Bezeichnungen der Kohlenstofftechnologie verwendet:

- Koks, benannt nach seinem Ausgangsmaterial z.B. als Petrolkoks, Steinkohlenteerpechkoks oder Rußkoks, entsteht bei Erhitzung des Ausgangsmaterials bis zu Temperaturen mittlerer Höhe, maximal 1400°C.
- Graphit ist ein synthetisch hergestelltes Kohlenstoffmaterial, das in einem vorhergegangenen Verfahrensschritt bis zu Temperaturen von 2300 bis 3100°C erhitzt wurde.
- Ein "gebranntes" Kohlenstoffmaterial besteht aus Kohlenstoff, der bis maximal 1300°C unter Luftabschluss erhitzt wurde.
- Ein "graphitiertes" Kohlenstoffmaterial besteht aus Kohlenstoff, der nach dem Brennen bei Temperaturen von 2300 bis 3100°C unter Luftabschluss erhitzt ("graphitiert") wurde.
- Rußkoks ist ein spezieller, im Handel nicht verfügbarer Rohstoff. Verfahren für seine Herstellung sind in den Schriften DE- Patentanmeldung PA 260 974 (v. 30.05.1951) oder der DE-Patentschrift Nr. 958 278 beschrieben.
- Graphitierter Rußkoks entsteht, wenn gebrannte Rußkokskörper nochmals, jedoch unter Ausschluss von Oxidantien, auf Graphitierugstemperatur, d.h. auf Temperaturen von vorzugsweise 2300 bis 3100°C erhitzt werden.

Im folgenden wird die bei der Anmelderin verwendete Methode zur Herstellung graphitierten Rußkokses beschrieben. Als Ausgangsmaterial ist jeder Ruß geeignet. Vorzugsweise verwendet man über den Handel erhältliche Pigment- oder Füllerruße, die nach definierten Verfahren hergestellt worden sind und die geringe Gehalte an Asche und an Kohlenwasserstoffen aufweisen, wobei bemerkt sei, dass Restgehalte an Kohlenwasserstoffen in dem Ruß für die Rußkoksherstellung an sich nicht ungünstig sind. Der Ruß wird, gegebenenfalls unter Verwendung von das Einmischen erleichfernden Hilfsmitteln wie Teeren, Ölen oder organischen Lösungsmitteln in bekannter Weise mit einem verkokbaren, kohlenwasserstoffhaltigen Bindemittel zu einer formbaren plastischen Masse gemischt. Vorzugsweise wird als Bindemittel ein handelsübliches Bindepech verwendet. Die zugesetzten Bindemittelmengen liegen im Bereich von 35 bis 65 Gew.-%, bezogen auf die fertige Mischung = 100 Gew.-%. Der Mischprozess wird in diesem Fall bevorzugt oberhalb des Erweichungspunktes oder -Bereiches des Bindemittels durchgeführt. Die so erhaltene Mischung wird dann zu Zwischenproduktkörpern geformt und es werden diese Formkörper unter Ausschluss oxidierend wirkender Medien zur Verkokung der enthaltenen Bindemittelkomponente bis zu Temperaturen von 800 bis 1400°C gebrannt. So behandelte Körper bestehen aus Rußkoks. Für die Herstellung des Werkstoff des ersten Gleitelements der Gleitpaarung wird jedoch graphitierter Rußkoks verwendet. Um diesen zu erhalten, müssen die gebrannten Rußkokskörper, wiederum unter Ausschluss von Oxidantien, zusätzlich auf Graphitierungstemperatur, d.h. auf Temperaturen von vorzugsweise 2300 bis 3100°C erhitzt werden. Um ein für die Herstellung des ersten Gleitelements geeignetes Material zu erhalten, werden die Körper aus Rußkoksgraphit gebrochen und auf Mehlfeinheit gemahlen. Alle vorgenannten Verfahrensschritte wie Zerkleinern, Mischen, Formgeben, Brennen und Graphitieren sind als solche Stand der Technik.

Der im wesentlichen aus Kohlenstoff bestehende Gleitwerkstoff des ersten Gleitelements wird hergestellt, indem eine Trockengutmischung hergestellt wird, die 30 bis 100 Gew.-% graphitierten Rußkoks und/ Naturgraphit enthält, bevorzugt 45 bis 90 Gew.-% und besonders bevorzugt 60 bis 85 Gew.-%. Die Mischungen, die zu weniger als 100 Gew.-% aus graphitiertem Rußkoks und/ Naturgraphit bestehen, enthalten zusätzlich einen oder mehrere nämlich synthetisch hergestellte Graphite, wie Elektrographit, Lonza-Graphit bzw. Kish-Graphit, und anorganische Zusatzstoffe wie beispielsweise Siliziumdioxid, natürliche und synthetische Silikate, Aluminiumoxid oder Siliziumcarbid. Von diesen Zusätzen sind Elektrographit und Siliziumdioxid bevorzugt. Alle Komponenten der Trockengutmischung sind auf Mehlfeinheit gemahlen. Trockengutmischungen dieser Art haben folgende Zusammensetzungen:

- 30 bis 100 Gew.-% Rußkoksgraphit und Naturgraphit
- 0 bis 55 Gew.-% synthetisch hergestellter Graphit (sowohl naturgraphitähnlicher als auch polygranularer Graphit)
- 0 bis 15 Gew.-% anorganische Zusätze.

Eine bevorzugte Trockengutmischung besteht aus

- 45 bis 90 Gew.-% Rußkoksgraphit und/ Naturgraphit
- 10 bis 38 Gew.-% synthetisch hergestellter Graphit

-   2 bis 12 Gew.-% anorganischen Zuschlagstoffen.

Die synthetisch hergestellte Graphitkomponente besteht dabei vorzugsweise aus kristallographisch gut geordnetem polygranularem Elektrographit und die anorganische Komponente aus Siliziumdioxid. Die Trockengutmischung wird sodann mit verkokbaren, organischen Verbindungen wie Harze enthaltenden Bindemittel und Pechen, vorzugsweise einem käuflichen Bindepech, dessen Erweichungspunkt nach Krämer-Samow (DIN 52 025) bevorzugt im Bereich von 70 bis 110°C liegt, gemischt und danach zu Formkörpern gepresst. Hierbei beträgt der Masseanteil des Bindemittels bezogen auf die Masse der Trockenmischung 10 Gew.-% bis 50 Gew.-%, bevorzugt 20 Gew.-% bis 40 Gew. % und besonders bevorzugt 30 Gew.-% bis 35 Gew. %. Die so erhaltenen Formkörper können bereits die Grundform der gewünschten Gleitelemente aber auch eine andere für die weitere Verarbeitung günstige Form haben. Die Formkörper werden sodann unter Ausschluss oxidierend wirkender Substanzen gebrannt, wobei bevorzugt Produkttemperaturen im Bereich von 800 bis 1300°C erreicht werden. Nach Abkühlung der Körper in gegen Oxidation inerter Atmosphäre werden sie gegebenenfalls mechanisch zu den gewünschten Gleitelementen bearbeitet und danach einem imprägnierschritt zugeführt. Dazu werden sie nach bekannten Verfahren mit mindestens einem der Stoffe aus der Gruppe Metalle oder, Metalliegierungen imprägniert. Bevorzugt werden als Metall oder Legierungsbestandteil Nickel, Silber, Kupfer und Antimon eingesetzt, hierbei besonders bevorzugt Antimon.
Die imprägnierten Teile werden dann auf die im Einsatz als Gleitelemente erforderliche Form und Oberflächengüte endbearbeitet

Der Gleitwerkstoff des ersten Gleitelements weist üblicherweise einen Anteil von graphitiertem Rußkoks und/ Naturgraphit von 17 bis 56 Gew.-% der Gesamtmasse auf, bevorzugt 26 bis 51 Gew.-% und besonders bevorzugt 34 bis 48 Gew.-%. Der Gewichtsanteil des Imprägniermittels am Gesamtgewicht des Gleitwerkstoffs des ersten Gleitelements beträgt üblicherweise, gegebenenfalls nach Carbonisierung oder Pyrolyse, 15 bis 40 Gew.-%, bevorzugt 15 bis 30 Gew.-% und besonders bevorzugt 20 bis 25 Gew.-%.

Der Gleitwerkstoff des ersten Gleitelements weist somit eine Struktur auf, in der graphitische Füllstoffe wie der graphitierte Rußkoks und/ Naturgraphit und die sonstigen synthetisch hergestellten Graphitanteile der Trockenmischung in einer carbonisierten, nicht graphitischen Matrix eingebunden sind, wobei die Poren des Werkstoffs mit dem Imprägniermittel gefüllt sind. Diese Materialstruktur hebt sich somit sowohl von den üblicherweise gebrannten Kohlenstoffwerkstoffen, die keinerlei graphitische Struktur aufweisen als auch Graphitwerkstoffen ab, die eine durchgehende graphitische Struktur besitzen.
Zusätzlich weist das erste Gleitelement zumindestens teilweise an der Oberfläche auch noch eine Metalloxidschicht auf. Hierbei handelt es sich unter anderem um die Oxide von Nickel, Silber, Kupfer und Antimon und ihren Legierungen. Die Metalloxidschicht kann zum Beispiel mit den üblichen Abscheideverfahren der Dünnschichttechnologie hergestellt sein (z.B.: CVD, PVD, MBE). Bevorzugt besteht die Metalloxidschicht des ersten Gleitelements aus einem Oxid des Metalles oder der Metalllegierung, mit der der Gleitwerkstoff des Gleitelements imprägniert wurde. Zumeist ist die Dicke der Metalloxidschicht kleiner als 100 $\mu$m, bevorzugt kleiner als 1 $\mu$m und besonders bevorzugt kleiner als 10 nm. Besteht das zweite Gleitelement ebenfalls aus einen Kohlensloffwerkstoff, so kann auch dieses zumindestens teilweise an der Oberfläche eine solche Metalloxidschicht aufweisen.

Erfindungsgemäß können freie, von überkritischem Wasserdampf beaufschlagte Flächen der Gleitelemente eine Infrarotstrahlung reflektierende Schicht, vorzugsweise eine Goldbeschichtung, und/oder eine wärmeisolierende Schicht, vorzugsweise aus Zirkoniumoxiden (ZrO und/oder ZrO$_2$) aufweisen. Mit diesen Schichten können sowohl Wärmeverluste im Arbeitsraum als auch der chemische Angriff auf die beschichteten Oberflächen verhindert bzw. vermindert werden.

Die technischen Daten des Gleitwerkstoffs des ersten Gleitelements einer beispielhaften erfindungsgemäßen Paarung sind die folgenden:
Trockengutzusammensetzung

| | |
|---|---|
| 75 Gew.-% | Rußkoksgraphit, |
| 23 Gew.-% | kristalliner Naturgraphit |
| 2 Gew.-% | Mineralien |
| 35 Gew.-% | der Trockenmischung Bindepech |

Korngröße des Trockenguts:
| | |
|---|---|
| Durchgang d$_{50}$% | 17 $\mu$m |

(fortgesetzt)

| Durchgang $d_{95}$% | 45 $\mu$m |
| --- | --- |

Herstellungsverfahren wie vorbeschrieben.

Imprägnierung mit Antimon.

Diese Gleitelemente waren durch folgende Kennwerte charakterisiert:

| Härte (HR) (DIN 51917) | 115 |
| --- | --- |
| Dichte (DIN IEC 413) | 2,2 g/cm$^3$ |
| Biegefestigkeit (DIN 51902) | 80 N/mm$^2$ |
| Wärmeleitfähigkeit (DIN 51908) | 20 W/mK |

Der Gleitwerkstoff des zweiten Gleitelements im gegebenen Beispiel besteht aus einem austenitischen Stahl 1.4876 (DIN- Bezeichnung: X10NiCrAlTi32-20), der amorphen diamantähnlichen Kohlenstoffschicht (DLC- Schicht) beschichtet ist, die mittels CVD- oder PVD- Verfahren auf dem Stahl abgeschieden wurde.

Im folgenden wird das gegebene Beispiel der erfindungsgemäßen Gleitpaarungen verglichen mit zwei Vergleichsgleitpaarungen, bei denen das erste Gleitelement aus einem anderen Werkstoff besteht, wohingegen der Werkstoff des zweiten Gleitelements nicht geändert wurde.

Der Werkstoff des ersten Gleitelements der Vergleichsgleitpaarung 1 besteht aus einem Kohlenstoffwerkstoff, der aus Mesophasenpulver hergestellt wurde.

Dagegen besteht der Werkstoff des ersten Gleitelements, der Vergleichsgleitpaarung 2 besteht aus einem mit Antimon imprägnierten Kohlenstoffwerkstoff, bei dem ausschließlich synthetisch hergestellten Graphit als Füllstoff in einer carbonisierten, nicht graphitischen Matrix eingebunden ist.

Die Gleiteigenschaften der beschriebenen Gleitpaarungen wurden auf einem Hochtemperaturtribometer bestimmt, das mit einer Stift/Scheibe- Anordnung betrieben wurde. Die Versuche wurden hierbei unter deionisiertem Wasserdampf bei einer Temperatur von 400°C durchgeführt.

Der volumetrische Verschleiß $W_v$ wurde gemäß der DIN 50321 als Verschleißmessgröße bestimmt. Hieraus wurde dar von der bei der Reibung wirkenden Normalkraft $F_N$ und dem Gleitweg s unabhängige Verschleißkoeffizient $k_v$ bestimmt als:

$$k_v = W_v / (F_N \ s) \ .$$

Weiterhin wurde die Reibungszahl nach einem Gleitweg von 20.000 m bestimmt.

Tabelle 1

| | Volumetrischer Verschleiß $W_v$ [mm$^3$] | Verschleißkoeffizient $k_v$ [mm$^3$ / Nm] | Reibungszah nach 20.000 |
| --- | --- | --- | --- |
| Erfindungsgemäße Gleitpaarung | 0,15 | 7,65 x 10$^{-7}$ | 0,03 |
| Vergleichsgleitpaarung 1 | 0,66 | 3,30 x 10$^{-6}$ | 0,07 |
| Vergleichsgleitpaarung 2 | 3,45 | 1,73 x 10$^{-5}$ | 0,05 |

**Patentansprüche**

1. Gleitpaarung für von Wasserdampf mit hohem Druck- und Temperaturniveau beaufschlagte Maschinenteile, vorzugsweise Kolben-Zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,

wobei

der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und Naturgraphit enthält und dessen Poren mit Metall oder, einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass der Werkstoff des zweiten Gleitelements ein eisenhaltiger, vorzugsweise mit Chrom und/oder Nickel legierter hochwarmfester Werkstoff ist, der mindestens an der Gleitfläche mit einer Nitrierschicht versehen ist.

2. Gleitpaarung nach Patentanspruch 1,
   **dadurch gekennzeichnet, dass**
   das aus hochwarmfestem Werkstoff, mit Chrom und/oder Nickel legiert hergestellte Gleitelement, pulvermetallurgisch hergestellt ist.

3. Gleitpaarung nach Patentanspruch 1 oder 2,
   **dadurch gekennzeichnet, dass** der hochwarmfeste Werkstoff des zweiten Gleitelements vorzugsweise 15-25 Gew.-% Chrom und/oder 25-40 Gew.-% Nickel aufweist.

4. Gleitpaarung für von Wasserdampf mit hohem Druck- und Temperaturniveau beaufschlagte Maschinenteile, vorzugsweise Kolben-Zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,
   wobei
   der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und/oder Naturgraphit enthält und dessen Poren mit Metall oder, einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass das zweite Gleitelement aus einer Leichtmetalllegierung, vorzugsweise mit zwei oder mehreren der nachgenannten Stoffe Al; Mg; Ti besteht.

5. Gleitpaarung für von Wasserdampf mit hohem Druck- und Temperaturniveau beaufschlagte Maschinenteile, vorzugsweise Kolben-Zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,
   wobei
   der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und/oder Naturgraphit enthält und dessen Poren mit Metall, oder einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass das zweite Gleitelement aus einem pulvermetallurgisch hergestellten Werkstoff, der Eisen bzw. Stahl und Titankarbiden enthält, besteht.

6. Gleitpaarung für von Wasserdampf mit hohem Druck- und Temperaturniveau beaufschlagte Maschinenteile, vorzugsweise Kolben-Zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,
   wobei
   der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und/oder Naturgraphit enthält und dessen Poren mit Metall, oder einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass das zweite Gleitelement aus gesintertem Hartmetall besteht oder eine Gleitschicht aus Hartmetall aufweist.

7. Gleitpaarung für von Wasserdampf mit hohem Druck- und Temperaturniveau größer 400°C und kleiner gleich 800°C beaufschlagte Maschinenteile, vorzugsweise Kolben-zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,
   wobei
   der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und/oder Naturgraphit enthält und dessen Poren mit Metall oder, einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass das zweite Gleitelement aus einem Keramikverbundstoff hergestellt ist, der bevorzugt aus Titankarbid, Chrom und Nickel besteht.

8. Gleitpaarung nach Patentanspruch 7,
   **dadurch gekennzeichnet, dass**
   der Keramikverbundstoff zusätzlich Mangan enthält.

9. Gleitpaarung für von Wasserdampf mit hohem Druck- und Temperaturniveau beaufschlagte Maschinenteile, vorzugsweise Kolben-Zylinder-Anordnung für Dampfmotoren, mit einem ersten Gleitelement, das aus einem im wesentlichen aus Kohlenstoff bestehenden Werkstoff hergestellt wurde, vorzugsweise einem Kolben, Kolbenring und einem zweiten Gleitelement, vorzugsweise einer Zylinder- oder Führungsbuchse,
   wobei
   der im wesentlichen aus Kohlenstoff bestehende Werkstoff des ersten Gleitelements ein synthetisches, gebranntes, jedoch nicht graphitiertes Kohlenstoffmaterial ist, das als wesentlichen Füllstoff graphitierten Rußkoks und/oder Naturgraphit enthält und dessen Poren mit Metall oder einer Metalllegierung, gefüllt sind wobei das erste Gleitelement zumindest teilweise an der Oberfläche eine Metalloxidschicht aufweist, die ein Oxid des Metalls oder der Metalllegierung ist mit dem die Poren des ersten Gleitelementes gefüllt sind und dass das zweite Gleitelement aus einem Kohlenstoffwerkstoff, der zumindest im wesentlichen Graphit beinhaltet, besteht.

10. Gleitpaarung nach einem der vorherigen Patentansprüche
    **dadurch gekennzeichnet, dass**
    freie von überkritischem Wasserdampf beaufschlagte Flächen der Maschinenteile eine Infrarotstrahlung reflektierende Schicht, vorzugsweise eine Goldbeschichtung, aufweisen.

11. Gleitpaarung nach einem der vorherigen Patentansprüche
    **dadurch gekennzeichnet, dass**
    freie von überkritischem Wasserdampf beaufschlagte Flächen der Maschinenteile eine wärmeisolierende Schicht, vorzugsweise aus Zirkoniumoxid, aufweisen.

12. Gleitpaarung nach einem der vorherigen Patentansprüche
    **dadurch gekennzeichnet, dass**
    der Werkstoff des zweiten Gleitelements eine Verschleißschutzschicht aufweist.

13. Gleitpaarung nach Patentanspruch 12,
    **dadurch gekennzeichnet, dass**
    die Verschleißschutzschicht eine Titannitrid-, Chromnitrid-, Chromkarbidschicht oder eine amorphe diamantähnliche Kohlenstoffschicht ist.

14. Gleitpaarung nach mindestens einem der Patentansprüche 1 bis 13,
    **dadurch gekennzeichnet, dass**
    der im wesentlichen aus Kohlenstoff bestehende Werkstoff des ersten Gleitelements mit Nickel, Silber, Kupfer, Antimon oder Legierungen davon imprägniert ist.

15. Gleitpaarung nach mindestens einem der Patentansprüche 1 bis 14,
    **dadurch gekennzeichnet, dass**
    der im wesentlichen aus Kohlenstoff bestehende Werkstoff des ersten Gleitelements 17 bis 56 Gew.-% graphitierten Rußkoks und/oder Naturgraphit enthält, bevorzugt 26 bis 51 Gew.-% und besonders bevorzugt 34 bis 48 Gew.-%.

16. Gleitpaarung nach mindestens einem der Patentansprüche 1 bis 15,
    **dadurch gekennzeichnet, dass**
    die Trockengutkomponente bei der Herstellung des im wesentlichen aus Kohlenstoff bestehenden Werkstoffs des ersten Gleitelements 30 bis 100 Gew.-% graphitierten Rußkoks und/oder Naturgraphit enthalten hat, bevorzugt 45 bis 90 Gew.-% und besonders bevorzugt 60 bis 85 Gew.-%.

17. Gleitpaarung nach mindestens einem der Patentansprüche 1 bis 16,
    **dadurch gekennzeichnet, dass**

der im wesentliche aus Kohlenstoff bestehende Werkstoff des ersten Gleitelements als zusätzliche Komponenten synthetisch hergestellten Graphit und/oder anorganische Zusätze enthält.

**18.** Gleitpaarung nach mindestens einem der Patentansprüche 1 bis 17,
**dadurch gekennzeichnet, dass**
die Trockengutkomponente bei der Herstellung des im wesentlichen aus Kohlenstoff bestehenden Werkstoffs des ersten Gleitelements als zusätzliche Komponenten synthetisch hergestellten Graphit und/oder anorganische Zusätze enthalten hat.

**19.** Gleitpaarung nach mindestens einem der Patentansprüche 1 bis 18,
**dadurch gekennzeichnet, dass**
der im wesentlichen aus Kohlenstoff bestehende Werkstoff des ersten Gleitelements zwischen 15 Gew.-% und 40 Gew.-% Metall oder eine Metalllegierung, beinhaltet, vorzugsweise zwischen 15 Gew.-% und 30 Gew.-% und besonders vorzugsweise zwischen 20 Gew.-% und 25 Gew.-%.

**20.** Gleitpaarung gemäß Patentanspruch 19,
**dadurch gekennzeichnet, dass**
das Metall Antimon ist.


**Claims**

**1.** Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and natural graphite as a significant filler and the pores of which are filled with metal or a metal alloy, at which the first sliding element, on at least part of its surface, has a metal oxide layer, which consists of an oxide of this metal or of this metal alloy which is filled in the pores of the first sliding element, and that the material of the second sliding element is an iron-containing, high-temperature-resistant material which has preferably been alloyed with chromium and/or nickel and is provided with a nitrided layer at least on the sliding surface.

**2.** Pair of sliding elements according to Patent Claim 1, **characterized in that** the sliding element produced from high-temperature-resistant material alloyed with chromium and/or nickel is produced by powder metallurgy.

**3.** Pair of sliding elements according to Patent Claim 1 or 2, **characterized in that** the high-temperature-resistant material of the second sliding element preferably contains 15-25% by weight of chromium and/or 25-40% by weight of nickel.

**4.** Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and/or natural graphite as a significant filler and the pores of which are filled with metal or a metal alloy at which the first sliding element, on at least part of its surface, has a metal oxide layer, which consists of an oxide of this metal or of this metal alloy which is filled in the pores of the first sliding element and that the second sliding element consists of a light metal alloy, preferably comprising two or more of the following substances: Al; Mg; Ti.

**5.** Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and/or natural graphite as a significant filler and the pores of which are filled with metal or a metal alloy at which the first sliding element, on at least part of its surface, has a metal oxide layer, which consists of an oxide of this metal or of this metal alloy which is filled in the pores of the first sliding element, and that the second sliding element consists of a material which has been produced by powder metallurgy and contains iron or steel and titanium carbides.

6. Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and/or natural graphite as a significant filler and the pores of which are filled with metal or a metal alloy, at which the first sliding element, on at least part of its surface, has a metal oxide layer, which consists of an oxide of this metal or of this metal alloy which is filled in the pores of the first sliding element, and that the second sliding element consists of sintered hard metal or has a sliding layer of hard metal.

7. Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and/or natural graphite as a significant filler and the pores of which are filled with metal or a metal alloy at which the first sliding element, on at least part of its surface, has a metal oxide layer, which consists of an oxide of this metal or of this metal alloy which is filled in the pores of the first sliding element, and that the second sliding element is made from a ceramic composite material which preferably consists of titanium carbide, chromium and nickel.

8. Pair of sliding elements according to Patent Claim 7, **characterized in that** the ceramic composite material additionally contains manganese.

9. Pair of sliding elements for machine parts exposed to steam at a high pressure and temperature level, preferably piston-cylinder arrangement for steam engines, having a first sliding element, which has been produced from a material which substantially comprises carbon, preferably a piston or a piston ring, and a second sliding element, preferably a cylinder liner or guide bush, at which the material of the first sliding element, which substantially comprises carbon, is a synthetic, fired but not graphitized carbon material which contains graphitized carbon black coke and/or natural graphite as a significant filler and the pores of which are filled with metal or a metal alloy at which the first sliding element, on at least part of its surface, has a metal oxide layer, which consists of an oxide of this metal or of this metal alloy which is filled in the pores of the first sliding element and that the second sliding element consists of a carbon material which at least substantially comprises graphite.

10. Pair of sliding elements according to one of the preceding patent claims, **characterized in that** free surfaces of the machine parts which are acted on by supercritical steam have a layer which reflects infrared radiation, preferably a coating of gold.

11. Pair of sliding elements according to one of the preceding patent claims, **characterized in that** free surfaces of the machine parts which are acted upon by supercritical steam have a thermally insulating layer, preferably of zirconium oxide.

12. Pair of sliding elements according to one of the preceding patent claims, **characterized in that** the material of the second sliding element has a wear-resistant layer.

13. Pair of sliding elements according to Patent Claim 12, **characterized in that** the wear-resistant layer is a titanium nitride, chromium nitride or chromium carbide layer or an amorphous diamond-like carbon layer.

14. Pair of sliding elements according to at least one of Patent Claims 1 to 13, **characterized in that** the material of the first sliding element which substantially comprises carbon is impregnated with nickel, silver, copper, antimony or alloys thereof.

15. Pair of sliding elements according to at least one of Patent Claims 1 to 14, **characterized in that** the material of the first sliding element which substantially comprises carbon contains 17 to 56% by weight of graphitized carbon black coke and/or natural graphite, preferably 26 to 51% by weight and particularly preferably 34 to 48% by weight.

16. Pair of sliding elements according to at least one of Patent Claims 1 to 15, **characterized in that** the dry-material component for production of the material of the first sliding element which substantially comprises carbon contained from 30 to 100% by weight of graphitized carbon black coke and/or natural graphite, preferably 45 to 90% by weight, and particularly preferably 60 to 85% by weight.

17. Pair of sliding elements according to at least one of Patent Claims 1 to 16, **characterized in that** the material of the first sliding element which substantially comprises carbon contains, as additional components, synthetically produced graphite and/or inorganic additives.

18. Pair of sliding elements according to at least one of Patent Claims 1 to 17, **characterized in that** the dry-material component used to produce the material of the first sliding element which substantially comprises carbon contained, as additional components, synthetically produced graphite and/or inorganic additives.

19. Pair of sliding elements according to at least one of Patent Claims 1 to 18, **characterized in that** the material of the first sliding element, which substantially comprises carbon, contains between 15% by weight and 40% by weight of metal or a metal alloy, ceramic or synthetic resin and/or pitch which has been carbonized, preferably between 15% by weight and 30% by weight and particularly preferably between 20% by weight and 25% by weight.

20. Pair of sliding elements according to Patent Claim 19, **characterized in that** the metal is antimony.

**Revendications**

1. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston, et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique, et le matériau du deuxième élément de glissement est un matériau contenant du fer résistant à de hautes températures, allié de préférence à du chrome et/ou du nickel, qui est pourvu au moins sur la surface de glissement d'une couche nitrurée.

2. Appariement de glissement selon la revendication 1, **caractérisé en ce que** l'élément de glissement fabriqué à partir d'un matériau résistant à de hautes températures et allié à du chrome et/ou du nickel est fabriqué par métallurgie des poudres.

3. Appariement de glissement selon la revendication 1 ou 2, **caractérisé en ce que** le matériau résistant à de hautes températures du deuxième élément de glissement présente de préférence 15 à 25 % en poids de chrome et/ou 25 à 40 % en poids de nickel.

4. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et/ou du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique, et le deuxième élément de glissement est composé d'un alliage de métal léger, contenant de préférence deux ou plus des matières ci-après : Al ; Mg ; Ti.

5. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et/ou du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique,, et le deuxième élément de glissement est composé d'un matériau fabriqué par métallurgie des poudres, qui contient du fer ou de l'acier et des carbures de titane.

6. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston, et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et/ou du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique, et le deuxième élément de glissement est composé de carbure fritté ou présente une couche de glissement en carbure.

7. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston, et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et/ou du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique, et le deuxième élément de glissement est fabriqué à partir d'un matériau composite de céramique qui est composé de préférence de carbure de titane, de chrome et de nickel.

8. Appariement de glissement selon la revendication 7, **caractérisé en ce que** le matériau composite de céramique contient de plus du manganèse.

9. Appariement de glissement pour pièces de machine sollicitées à la vapeur d'eau à un niveau de pression et de température élevé, de préférence arrangement piston-cylindre pour moteurs à vapeur, comportant un premier élément de glissement qui a été fabriqué à partir d'un matériau composé substantiellement de carbone, de préférence un piston, un segment de piston et un deuxième élément de glissement, de préférence une douille de cylindre ou de guidage, et le matériau composé substantiellement de carbone du premier élément de glissement est un matériau synthétique à base de carbone, cuit mais non graphitisé, qui contient comme matière de charge substantielle du coke de noir de carbone graphitisé et/ou du graphite naturel et dont les pores sont remplis de métal ou d'un alliage métallique, et le premier élément de glissement présente au moins partiellement une couche d'oxyde métallique sur sa surface qui est composée d'un oxyde de ce métal ou de cet alliage métallique, et le deuxième élément de glissement est composé d'un matériau à base de carbone qui contient au moins substantiellement du graphite.

10. Appariement de glissement selon l'une quelconque des revendications précédentes, **caractérisé en ce que** les surfaces libres sollicitées à la vapeur d'eau sur-critique des pièces de machine présentent une couche réfléchissant le rayonnement infrarouge, de préférence un revêtement en or.

11. Appariement de glissement selon l'une quelconque des revendications précédentes, **caractérisé en ce que** les surfaces libres des pièces de machine sollicitées à la vapeur d'eau sur-critique présentent une couche isolatrice thermique, de préférence en oxyde de zirconium.

12. Appariement de glissement selon l'une quelconque des revendications précédentes, **caractérisé en ce que** le matériau du deuxième élément de glissement présente une couche de protection contre l'usure.

13. Appariement de glissement selon la revendication 12, **caractérisé en ce que** la couche de protection contre l'usure est une couche de nitrure de titane, de nitrure de chrome, de carbure de chrome ou une couche de carbone amorphe similaire à du diamant.

**14.** Appariement de glissement selon au moins l'une quelconque des revendications 1 à 13, **caractérisé en ce que** le matériau composé substantiellement de carbone du premier élément de glissement est imprégné de nickel, d'argent, de cuivre, d'antimoine ou de leurs alliages.

**15.** Appariement de glissement selon au moins l'une quelconque des revendications 1 à 14, **caractérisé en ce que** le matériau composé substantiellement de carbone du premier élément de glissement contient 17 à 56 % en poids de coke de noir de carbone graphitisé et/ou de graphite naturel, de préférence 26 à 51 % en poids et notamment de préférence 34 à 48 % en poids.

**16.** Appariement de glissement selon au moins l'une quelconque des revendications 1 à 15, **caractérisé en ce que** le composant de produit sec a contenu, lors de la fabrication du matériau composé substantiellement de carbone du premier élément de glissement, 30 à 100 % en poids de coke de noir de carbone graphitisé et/ou de graphite naturel, de préférence 45 à 90 % en poids et notamment de préférence 60 à 85 % en poids.

**17.** Appariement de glissement selon au moins l'une quelconque des revendications 1 à 16, **caractérisé en ce que** le matériau composé substantiellement de carbone du premier élément de glissement contient comme composants supplémentaires du graphite fabriqué synthétiquement et/ou des additifs inorganiques.

**18.** Appariement de glissement selon au moins l'une quelconque des revendications 1 à 17, **caractérisé en ce que** le composant de produit sec, a contenu, lors de la fabrication du matériau composé substantiellement de carbone du premier élément de glissement, comme composants supplémentaires du graphite fabriqué synthétiquement et/ou des additifs inorganiques.

**19.** Appariement de glissement selon au moins l'une quelconque des revendications 1 à 18, **caractérisé en ce que** le matériau composé substantiellement de carbone du premier élément de glissement contient entre 15 % en poids et 40 % en poids de métal ou d'un alliage métallique, de préférence entre 15 % en poids et 30 % en poids et notamment de préférence entre 20 % en poids et 25 % en poids.

**20.** Appariement de glissement selon la revendication 19, **caractérisé en ce que** le métal est de l'antimoine.